# EUROPEAN PATENT APPLICATION

(11) **EP 3 534 020 A1**
(43) Date of publication of application: **04.09.2019**
(21) Application number: 19160030.3
(22) Date of filing: 28.02.2019
(51) Int. Cl.: F16B 45/02, F16B 2/08, F16B 2/22

(54) **CARABINERS**

(30) Priority: 01.03.2018 GB 201803336
(71) Applicant: Excalibur (Wales) Ltd, Llanberis, Gwynedd LL55 4EL (GB)
(72) Inventor: Swanson-Low, Dougie, Llanberis, Gwynedd LL55 4EL (GB)
(74) Representative: Hamilton, Alistair

(57) **Abstract**

A divider for converting a carabiner is disclosed. The divider can be removably applied to a carabiner. The divider comprised an elongate finger (328) that can be secured to a first part of the carabiner and a clip portion (322) that can be removably connected to a second part of the carabiner remote from the first part. The clip portion may be formed integrally with the finger or may be a separate component. The clip portion is typically resilient to enable it to readily be attached to and released from the carabiner. In some embodiments, the elongate finger is flexible and have an integrally-formed retention arrangement (326) disposed at one end of the elongate finger.

## Description

A typical carabiner has a C-shaped frame with an inwardly opening gate across the two free ends, which gate closes to create one single enclosed region within a loop the carabiner. This basic carabiner design commonly used, versatile and ideal for use in connecting components that have limited movement with respect to one another. However, when a carabiner is required to connect components that are moving with respect to one another (for example, a carabiner used with a belay device) then it is quite easy for the carabiner to twist or rotate from the position in which it was installed. This is undesirable because a carabiner is designed to be loaded along a load axis (typically a major axis), and rotation of the carabiner may cause off-axis loading which causes the carabiner to be substantially weakened.

There have been many proposals that provide or adapt carabiners to reduce the likelihood that off-axis loading can occur. The basic principle that each of these arrangements adopts is to divide the space within the loop of the carabiner to create two separate regions. Each element to be connected is located in a respective one of the separate regions, with the result that the carabiner cannot rotate and become misaligned. As compared with a conventional carabiner described above, these devices can improve safety and ensures that the interaction between the carabiner and an element that it is connecting, such as a running rope, remains consistent. The separate regions may be permanent features of the carabiner, may require tools to access the separate regions, or may allow a user to access the separate regions as required. It is the third of these with which the present invention is particularly concerned, and known examples are disclosed in GB-A-2 481 800 and GB-A-2 340 173, both of the present applicant, and EP-A-2 333 359.

A disadvantage of known carabiners is that they are implemented using specifically designed components. For example, in the case of GB-A-2 481 800, the clip component and carabiner must be specifically designed for use with one another and in the case of EP-A-2 333 359, a specifically designed carabiner is provided. However, there are many other shapes, sizes and configurations of carabiner that might benefit from multiple separated chambers.

An aim of this invention is to provide a mechanism by which a wide range of conventional carabiners can be adapted by an end user to incorporate two or more regions.

To this end, from a first aspect, the present invention provides apparatus for converting a carabiner comprising a divider that can be removably applied to a carabiner. The divider may comprise a flexible elongate finger that can be secured to a first part of the carabiner and a clip portion that can be removably connected to a second part of the carabiner remote from the first part.

This enables it to be connected to and removed from the second part of the carabiner without the need to disrupt the connection between the divider and the first part of the carabiner. Moreover, it enables reduction or elimination of the need for the divider to pivot with respect to the carabiner. Most preferably, the finger is sufficiently flexible as to enable it to be moved between a position in which it crosses the body of the carabiner to a position in which it is to one side of the carabiner. The finger may be formed of resilient plastic material or fabric material, such as a webbing.

In preferred embodiments, the divider includes a retention arrangement on the elongate finger that that can connect with a remote part of the elongate finger. The retention arrangement may be disposed at one end of the elongate finger.

For example, the retention arrangement may include a through-passage into which a free end of the finger can be inserted. In such cases, the retention arrangement includes a retainer that resists subsequent removal of the finger from the through-passage.

Alternatively, the retention arrangement may include a clasp that has retention formations that enable it to be secured around part of the body of a carabiner.

As a further alternative, the retention arrangement includes a continuous loop within which a part of the body of a carabiner can be received. The retention arrangement preferably includes a through hole that is shaped and dimensioned to correspond with a carabiner upon which it is intended to be mounted. This can serve to resist rotation of the retention arrangement on a carabiner.

Advantageously, that part of the elongate finger within the retention arrangement is substantially parallel with the part of the elongate finger on which the retention arrangement is disposed.

In preferred embodiments of the invention, the clip portion is a separate component that can be attached to a free end of the elongate finger. In alternative embodiments, the clip portion is formed integrally with the finger.

Typically, the clip portion is resilient to enable it to readily be attached to and released from the carabiner.

From a second aspect, this invention provides a carabiner to which a divider embodying the first aspect of the invention has been applied.

From a third aspect, this invention provides a method for converting a carabiner to increase the number of regions in which an item can be retained, comprising applying a divider according to the first aspect of the invention to the body of the carabiner.

Typically, the divider is secured to a back region of the carabiner and the clip is connected to a gate of the carabiner.

In embodiments where the finger is formed of flexible material, upon application of the divider to the carabiner, movement between the material of the divider and the carabiner is prevented in the region of the connection.

In cases where the retention of the divider arrangement includes a through-passage, the step of applying a divider to the body of the carabiner includes wrapping the finger around the body of the carabiner, passing the free end of the finger through the through-passage of the retainer, and pulling the finger in order to tighten it around the body of the carabiner.

Where the retention arrangement includes a continuous loop, the step of applying a divider to the body of the carabiner typically includes passing a free end of the body of the carabiner through the loop of the retention arrangement. For example, this is done by inserting the nose of the carabiner body into a through-hole formed by the loop.

The further including a step of trimming a finger component of the divider to accord with a relevant dimension (for example, the distance between the back and the closed gate) of the carabiner. In such cases, the method may further including a step of applying a terminator to the trimmed finger component.

Embodiments of the invention will now be described in detail, by way of example, and with reference to the accompanying drawings, in which:
Figure 1 shows a carabiner that has been adapted to have two regions using apparatus and a method embodying the invention;
Figure 2 shows a divider assembly suitable for adapting a carabiner in an embodiment of the invention;
Figure 3 shows the components of the assembly of Figure 2;
Figures 4 and 5 are more detailed views of a first component of the assembly of Figure 2;
Figures 6 and 7 are more detailed views of a second component of the assembly of Figure 2;
Figure 8 shows a divider being a second embodiment of the invention;
Figure 9 shows a divider being a second embodiment of the invention;
Figures 10, 11 and 12 show a divider being a second embodiment of the invention;
Figures 13 and 14 show components of the embodiment of Figures 10 to 12;

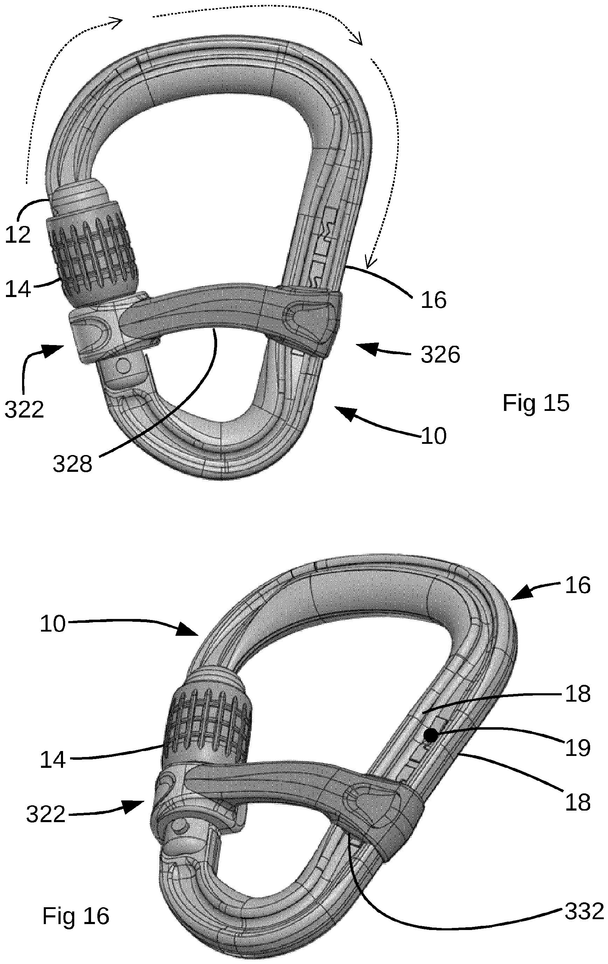

Figures 15 and 16 show the divider of Figures 10 to 12 in place on a carabiner; and
Figures 17 and 18 show an alternative divider formed of fabric material.

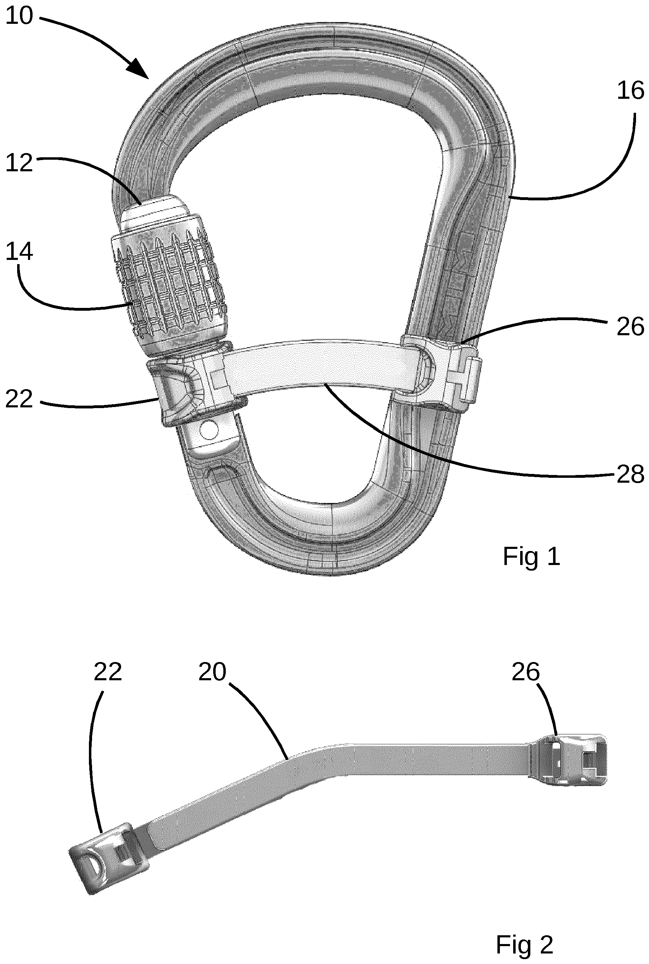

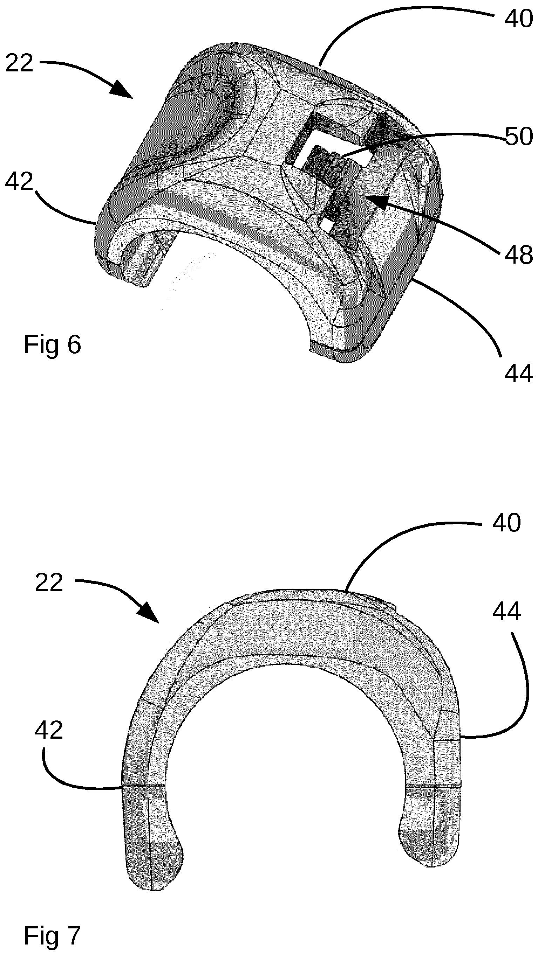

With reference to Figures 1 to 7, this example is based upon a conventional screwgate carabiner 10. Since this carabiner is conventional, it will not be described here in detail. However, for the purposes of illustrating this invention, its features of note are: a C-shaped body on which is carried a pivotal gate 12 that closes an opening of the body. A threaded locking barrel 14 is carried on the gate 12. The body has a back 16 opposite the opening, the back having an I-shaped cross section that has two flange regions 18 interconnected by a web region 19. Within the body, there is a single region through which a rope or other item can pass.

In order to adapt the carabiner to provide it with two regions, apparatus shown in the figures is used, which comprises two parts: a divider 20 and a terminator 22.

The divider 20 is formed as a moulding of plastic material and has a construction similar to that of a low-profile cable tie. The divider 20 has a head 26 from which a flexible finger 28 extends.

The flexible finger 28 is shaped as an elongate strip that has a generally rectangular cross section. It has first and second straight regions 30, 32 interconnected by a curved region 34 such that the first straight region 30 extends from the head 26 along an axis and the second straight region 32 extends from the curved region to a free end along an axis that is offset from that of the first straight region 30 by approximately 20°. On one surface of the straight regions 30, 32 there is a region 34, 36 in which multiple ridges are formed, each ridge extending most of the way across the finger 28 in a direction transverse to the axis of the corresponding straight region 30, 32.

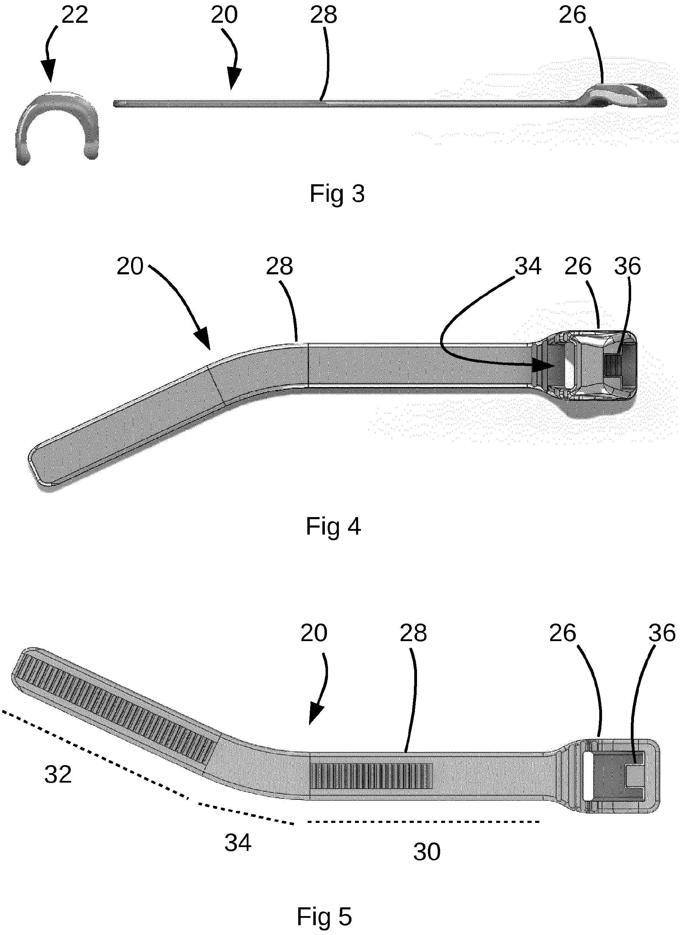

The head 26 (shown partly in section in Figure 5) has a passage 34 that has a generally rectangular cross-section and extends along an axis that is parallel of that of the first straight region 30, and has a base surface that is an extension of the surface of the first straight region 30 upon which the ridges are formed. The passage 34 is dimensioned to allow the flexible finger 28 to be inserted into it with minimal clearance. A resilient locking pawl 36 projects into the passage 34 from the base surface. The locking pawl 36 is angled towards the first straight region 30.

The terminator 22 is formed of resilient plastic material. It has a C-shaped cross-section that forms a back 40 from which first and second arms 42, 44 extend. A recess extends into the back 40 directed across the C-shaped section from the second arm 44 where it meets the back 40. The recess 48 is dimensioned to allow the flexible finger 28 to be inserted into it with minimal clearance, and has an end wall beyond which the flexible finger 28 cannot pass. A locking tab 50 projects into the passage 34 from a base surface. The locking tab 50 has several ridges that are angled into the recess 48.

Installation of the apparatus onto a carabiner 10 will now be described.

The flexible finger 28 is wrapped around the back 16 of the carabiner 10 and its free end is inserted into the passage 34 in the head 26. Interaction between the locking pawl 36 and the ridges prevents removal of the flexible finger 28 from the head 26. The finger 28 is laid across the carabiner to extend across the gate 12. It is then pulled so as to wrap tightly about the back 16 of the carabiner 10. The finger 28 can be pulled sufficiently tight as to eliminate (or at least substantially eliminate) movement between the head and the body of the carabiner. The finger 28 is trimmed to such a length that it extends approximately mid-way across the gate 12. The trimmed end of the finger 28 is then inserted into the recess 48 of the terminator 22 until it touches the end wall. Interaction between the locking tab 50 and the ridges prevent removal of the terminator 22 from the finger 28.

When the gate 12 is closed and secured by the locking barrel 14, the terminator 22 can be clipped onto the gate 12 adjacent to the locking barrel 14, the gate 12 passing between arms 42, 44. The arms 42, 44 are shaped and dimensioned to grip the gate 12. In this position, the finger 28 divides the loop of the carabiner to create two regions, each of which can act as a separate passage for a rope or other item. The terminator 22 also prevents the locking barrel 14 from becoming loose. The terminator 22 can be unclipped from the gate 12, allowing the finger 28 to be flexed away from the gate when required. The lack of movement between the divider and the carabiner minimises the occurrence of wear to the material of the divider.

From the forgoing, it will be seen that the invention can be applied to a wide variety of carabiners. The various widths of carabiner are accommodated by cutting the finger 28 to an appropriate length. Variations in the cross-sectional size and shape of the carabiner body are accommodated by flexibility in the terminator 22 and by the manner in which the finger 28 is wrapped around the back 16. Variations in the angle between the back 16 and the gate 12 can be accommodated by the flexibility of the finger 28. The apparatus can be applied to a carabiner by an end user and can be removed at any time by cutting the part of the finger 28 wrapped around the back 16.

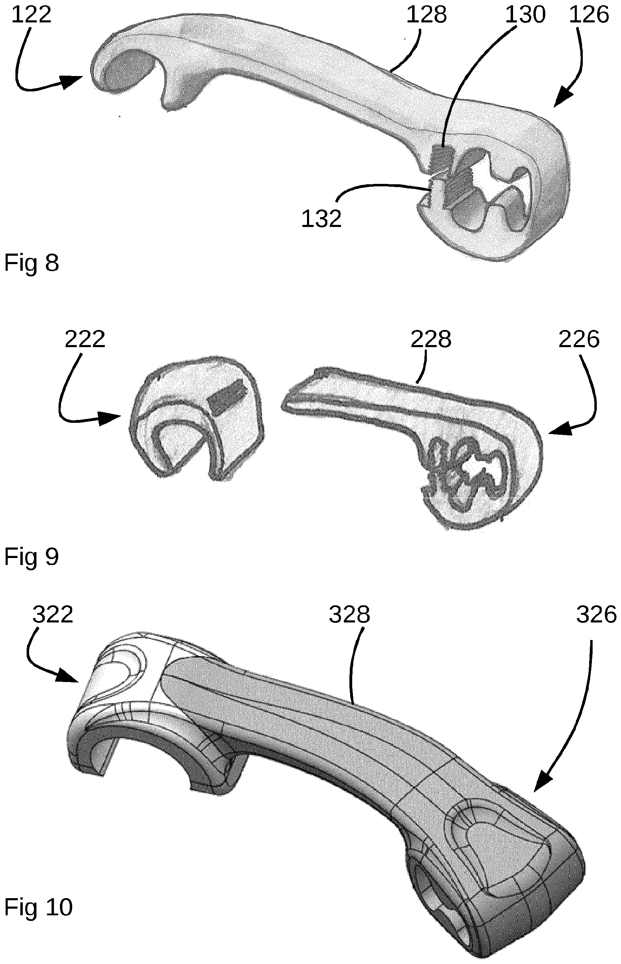

Alternative embodiments of the invention are show in Figures 8 to 10. These all work in essentially the same way as the embodiment described above, but with differences in the detail of the implementation.

The embodiment of Figure 8 implements the divider as a one-piece component. The terminator is replaced by a resilient clip 122 that is moulded integrally with a flexible finger 128 and a securing portion 126. The securing portion 126 comprises a moulded loop of plastic material. The securing portion 126 includes a transverse slot 130 adjacent to the finger 128 and a projecting tongue 132 near the far end of the loop from the finger 128. The slot 132 and the tongue have ridges such that the tongue 132 can be pushed into the slot 130, the ridges interengage to resist removal of the tongue 132 from the slot 130. The loop can be passed around the back of the carabiner and retained there by pushing the finger 132 into the slot 130 to secure the divider semi-permanently to the carabiner. Projections 134 may be formed in the loop to enhance its grip with the carabiner and to partially or entirely prevent rotation of the loop about the body of the carabiner. The clip 122 can be connected to and removed from the gate of the carabiner, as required. This embodiment may be less versatile than the first embodiment, since the length of the divide is fixed, but may also be simpler to manufacture.

The embodiment of Figure 9 is a compromise between the first and second embodiments, in that the finger 228 and the securing portion 226 are formed in one piece, but the clip 222 is a separate terminator, as in the first embodiment.

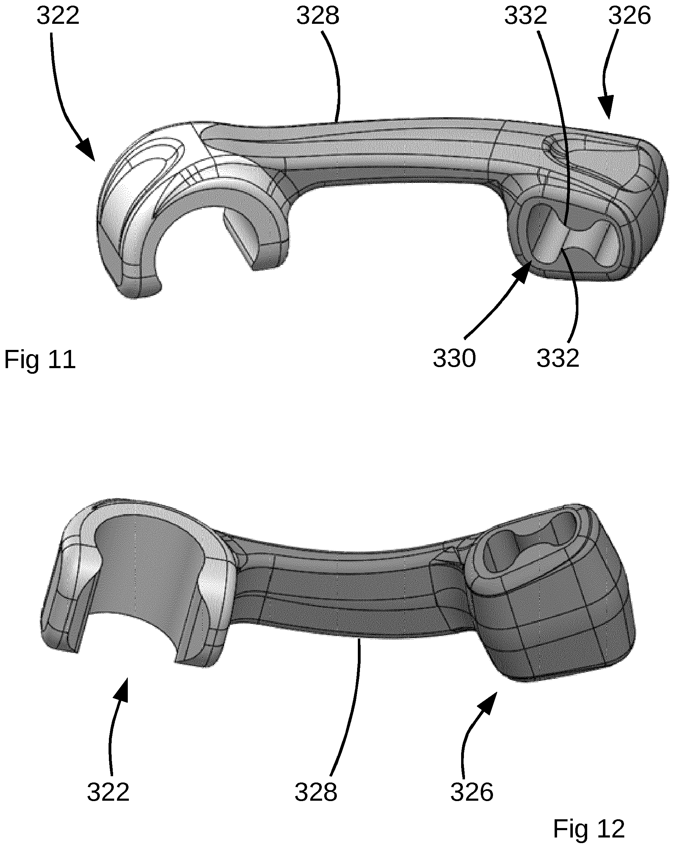

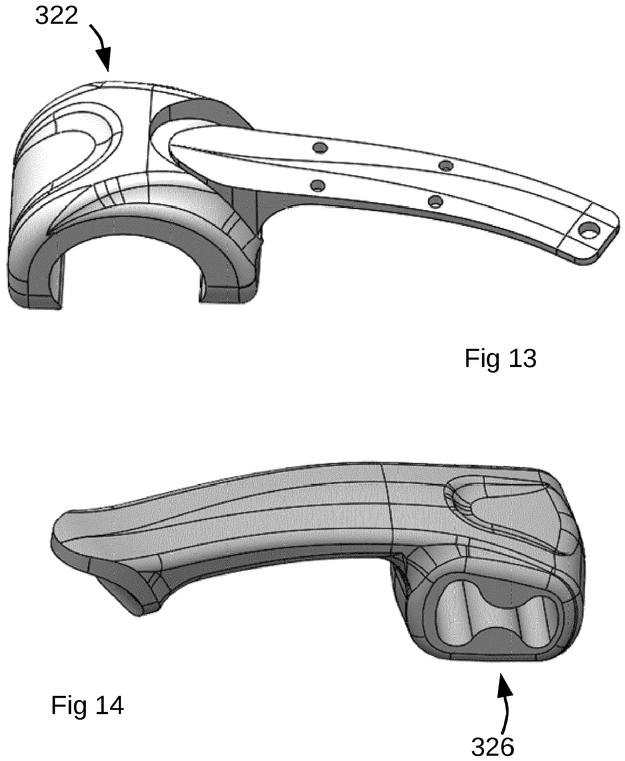

The embodiment of Figures 10 to 12 also implements the divider as a component formed from two co-moulded components, shown in Figures 13 and 14. In this embodiment, the securing portion 326 is a continuous loop having a through-hole 330 at one end of the finger 328 which can slide onto the body of a carabiner 10 from the a free end (the nose) of the body at an opening until it reaches the back 16 of the carabiner, as shown in Figures 13 and 14. In order for this to be possible, the divider is mainly formed from a soft, resilient, grippy material, e.g., a thermoplastic elastomer such as polyurethane or silicone. To provide sufficient stiffness for the clip 322, to give it sufficient stiffness to grip the gate, the divider may be co-moulded with a stiffer material, such as polypropylene or nylon 66, in the region of the clip 322. The flexibility of the material from which the main part of the divider, including the finger 328, is moulded may allow it to be used on a wider variety of carabiners than is the case for the second embodiment. The first component, shown in Figure 13, which includes the clip 322, is of stiff, resilient plastic. The second component, shown in Figure 14, which includes the loop 330, is of soft grippy material.

The through-hole 330 is shaped to correspond with the cross-sectional shape of the back 16 of the carabiner. In this example, the back 16 has an I-shaped section with two flanges 18 interconnected by a web 19, whereby a groove is formed on each side of the web 19 between pairs of flanges 18. The through-hole has two lobes 332, each lobe entering into a respective groove to prevent rotation of the securing portion 326 on the carabiner back 16. The through-hole is shaped and dimensioned such that it is a tight fit to grip the back 16 of the carabiner to substantially prevent rotation of the securing portion 325 around the back 16 and to resist its sliding along the back 16.

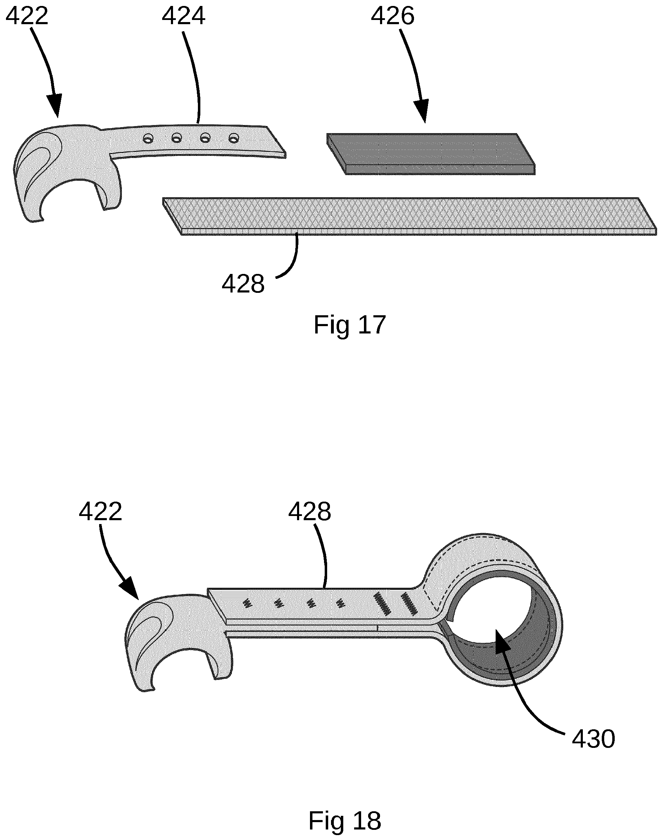

A further embodiment is shown in Figures 17 and 18. This embodiment comprises three components: a clip component that is formed of resilient plastic material and includes a resilient clip 422 from which a flat connecting strip 424 extends, a plurality of through-holes being formed through the connecting strip 424. In addition, it comprises a length of grippy plastic material 426, such as rubber, silicone, EPDM, TPU, TPE, and a strip of fabric 426, such as a textile webbing. The length of grippy plastic material 426 could be omitted if the webbing/textile/fabric had a coating applied to it (for example silicone, rubber or a polyurethane) to made it grippy.

The embodiment is assembled by forming by sewing the components together: sewing the length of grippy plastic material 426 onto the strip of fabric 426, then folding it over, to sandwich the connecting strip 424 between lengths of the strip of fabric 426. The strip of fabric 426 is and sewn through the holes in the connecting strip 424 to secure it in place.

Alternatively, the components described above could be glued together or ultrasonically bonded together.

The grippy material could be separate and slide over the webbing and grip the carabiner on either side.

The fabric material could be tubular and the hard plastic could be threaded inside of the tube. The textile element could be a plurality of different shapes and sizes to fit other carabiners

## Claims

1. A divider for converting a carabiner (10) that can be removably applied to a carabiner, the divider comprising a flexible elongate finger (28) that can be secured to a first part (16) of the carabiner and a clip portion (22) that can be removably connected to a second part of the carabiner remote from the first part.

2. A divider according to claim 1 that includes a retention arrangement (26) on the elongate finger (28) that that can connect with a remote part of the elongate finger.

3. A divider according to claim 2 in which the retention arrangement (26) is disposed at one end of the elongate finger (28).

4. A divider according to any preceding claim in which the retention arrangement includes a continuous loop (326) within which a part of the body of a carabiner can be received.

5. A divider according to claim 4 in which the retention arrangement includes a through hole (330) that is shaped and dimensioned to correspond with a carabiner upon which it is intended to be mounted to resist rotation of the retention arrangement on a carabiner.

6. A divider according to any preceding claim in which that part of the elongate finger within the retention arrangement is substantially parallel with the part of the elongate finger on which the retention arrangement is disposed.

7. A divider according to any preceding claim in which the retention arrangement (326) is formed integrally with the finger (328).

8. A divider according to any preceding claim in which the clip portion (322) is formed integrally with the finger (328).

9. A divider according to any preceding claim in which the clip portion is connected to the finger by sewing.

10. A divider according to any preceding claim in which the clip portion is resilient to enable it to readily be attached to and released from the carabiner.

11. A carabiner to which a divider according to any preceding claim has been applied.

12. A method for converting a carabiner to increase the number of regions in which an item can be retained, comprising applying a divider according to any preceding claim to the body of the carabiner.

13. A method according to claim 12 in which the divider is secured to a back region of the carabiner and the clip is connected to a gate of the carabiner.

14. A method according to claim 12 or claim 13 in which the divider is in accordance with claim 7 or any claim dependent therefrom in which the step of applying a divider to the body of the carabiner includes passing a free end of the body of the carabiner through the loop of the retention arrangement.

15. A method according to claim 14 in which the nose of the carabiner body is passed into a through-hole formed by the loop.
